# EUROPEAN PATENT APPLICATION

(11) **EP 1 471 437 A2**
(43) Date of publication of application: **27.10.2004**
(21) Application number: 04007011.2
(22) Date of filing: 24.03.2004
(51) Int. Cl.: G06F 17/21

(54) **Image layout information determination**

(30) Priority: 31.03.2003 JP 2003095378
(71) Applicant: SEIKO EPSON CORPORATION, Shinjuku-ku, Tokyo 163-0811 (JP)
(72) Inventor: Narusawa, Atsushi, Suwo-shi Nagano-ken 392-8502 (JP)
(74) Representative: Hoffmann, Eckart, Dipl.-Ing.

(57) **Abstract**

The present invention provides information processing technology according to which image rendering corresponding to image rendering components for rendering an image of an input form or the like can be executed appropriately even when the image rendering components cannot be used. An information processing device of the present invention determines the image rendering positions within an image of various objects constituting the image, and outputs to image rendering means layout information including image rendering commands for rendering the objects in their positions. The information processing device comprises a function for placing an inquiry with the image rendering means as to whether a predetermined image rendering command is usable or not, and a simulation function which, when the predetermined image rendering command is not usable, simulates image rendering corresponding to the predetermined image rendering command using an image rendering command (an image rendering command for a text object, image object, border object, background object, and so on) that can be used by the image rendering means, and outputs layout information including the simulation result.

## Description

### BACKGROUND

The present invention relates to technology for rendering an image by analyzing a document that is described in a structured tag language.

A system (for example, a browser, printer, or similar) for rendering images on the basis of documents described in a structured tag language such as HTML, XHTML, and XML typically comprises analysis means for analyzing a document described in the structured tag language and extracting objects (image rendering components such as text, images, borders, buttons, and so on) constituting an image, layout means for laying out each of the extracted objects to determine their positions within the image and outputting layout information including image rendering commands for rendering the objects in their positions, and image rendering means for rendering the image (by means of display, printing, and so on) on the basis of the layout information (see Japanese Patent Application Publication 2002-91726, for example).

In an image rendering system such as a browser, interactive input/output modes in which input from a user is received via a displayed input form or the like have become commonplace. Such input forms and the like are typically rendered using various image rendering components (for example, text boxes, password boxes, check boxes, select boxes, check boxes, exclusion boxes, radio buttons, submit buttons, reset buttons, multipurpose buttons, and so on) provided by a platform (Windows, JAVA, Unix, etc.), for example.

### SUMMARY

In an image rendering system such as a printer, software execution resources are limited, and hence platforms such as those described above are often not provided. There are also limitations on the image rendering components that can be used.

It is particularly difficult to conceive of an interactive input/output mode, in which input from a user is received via a printed input form or the like, in a printer, and hence the image rendering means of a printer are often unable to respond to an input form or the like. In other words, the image rendering components (image rendering components relating to interactive input/output) used to render the input form or the like often cannot be employed in a printer.

Hence when a document containing an image such as an input form is received in an image rendering system such as a printer, a problem arises in that rendering of the input form or the like cannot be executed (the input form or the like cannot be printed) unless the image rendering means are modified or replaced.

It is therefore an object of the present invention to provide an image rendering system which is capable of appropriately executing the rendering of an image corresponding to image rendering components required to render an image such as an input form or the like in cases where these image rendering components cannot be used by image rendering means.

To achieve this object, an information processing device of the present invention determines the image rendering positions within an image of various objects constituting the image, and outputs to image rendering means layout information including image rendering commands for rendering the objects in their positions. The information processing device comprises a function for placing an inquiry with the image rendering means as to whether a predetermined image rendering command is usable or not, and a simulation function which, when the predetermined image rendering command is not usable, simulates image rendering corresponding to the predetermined image rendering command using an image rendering command that can be used by the image rendering means, and outputs layout information including the simulation result. According to this constitution, when the image rendering means are capable of responding to the predetermined image rendering command, the image rendering command can be used to render an image efficiently, flexibly, and speedily, and even if the image rendering means cannot respond to the predetermined image rendering command, image rendering corresponding to the predetermined image rendering command can be executed appropriately on the basis of the simulation result.

The simulation function preferably simulates image rendering corresponding to the predetermined image rendering command using an image rendering command for at least one of a text object, an image object, a border object, and a background object. According to this constitution, basic image rendering commands are used in the simulation, and hence the present invention can be applied easily without the need to add to the image rendering means (or the platform providing the image rendering command) a function of responsiveness to special image rendering commands.

Further, an information processing device of the present invention determines the image rendering positions within an image of various objects constituting the image, and outputs to image rendering means layout information including these image rendering positions. The information processing device comprises a function for placing an inquiry with the image rendering means as to whether a predetermined object can be rendered or not, and a simulation function which, when the predetermined object cannot be rendered, simulates image rendering of the predetermined object using an object that can be rendered by the image rendering means, and outputs layout information including the simulation result. According to this constitution, when the image rendering means comprise a function for rendering the predetermined object, this function can be used to render the object efficiently, flexibly, and speedily, and even if the image rendering means do not comprise a function for rendering the predetermined object, image rendering corresponding to the predetermined object can be executed appropriately on the basis of the simulation result.

The simulation function preferably simulates image rendering of the predetermined object using at least one of a text object, an image object, a border object, and a background object. According to this constitution, basic objects are used in the simulation, and hence the present invention can be applied easily without the need to add to the image rendering means (or the platform providing the image rendering command) a special object rendering function.

The information processing device of the present invention preferably comprises analysis means for analyzing a document described in a structured tag language, and extracting therefrom objects constituting an image.

Further, the predetermined image rendering command or object is preferably a image rendering command (or object) relating to interactive input/output, or a image rendering command (or object) used in the image rendering of an input form.

An image rendering device of the present invention comprises the information processing device of the present invention, and image rendering means for rendering an image on the basis of the aforementioned layout information. The image rendering means inform the information processing device of a image rendering command or object that can be used by the image rendering means in response to an inquiry from the information processing device.

An information processing method of the present invention is a method for determining the image rendering positions within an image of various objects constituting the image, and outputting layout information including image rendering commands for rendering the objects in their positions. The information processing method comprises the steps of placing an inquiry with image rendering means, which serve as an output destination for the layout information, as to whether a predetermined image rendering command is usable, and when the predetermined image rendering command is not usable, simulating image rendering corresponding to the predetermined image rendering command using an image rendering command that can be used by the image rendering means, and outputting layout information including the simulation result.

Further, an information processing method of the present invention is a method for determining the image rendering positions within an image of various objects constituting the image, and outputting layout information including these image rendering positions. The information processing method comprises the steps of placing an inquiry with image rendering means, which serve as an output destination for the layout information, as to whether a predetermined object can be rendered, and when the predetermined object cannot be rendered, simulating image rendering of the predetermined object using an object that can be rendered by the image rendering means, and outputting layout information including the simulation result.

A program of the present invention causes the various steps of the information processing methods of the present invention to be executed on a computer. The program of the present invention can be installed or loaded on a computer through various types of recording medium such as CD-ROM, magnetic disc, and semiconductor memory, or via a communication network.

Note that in this specification, the term "means" does not simply signify physical means, but also includes cases in which a function comprised in the "means" is realized by software. Moreover, a function comprised in a single "means" may be realized by two or more physical means, and a function of two or more "means" may be realized by a single physical means.

### DESCRIPTION OF DRAWINGS

Fig. 1 is a block diagram showing the hardware constitution of a printer in a first embodiment;
Fig. 2 is a block diagram showing the functional constitution of an information processing portion in the first embodiment; and
Fig. 3 is a flowchart showing the operations of various tasks.

### DETAILED DESCRIPTION

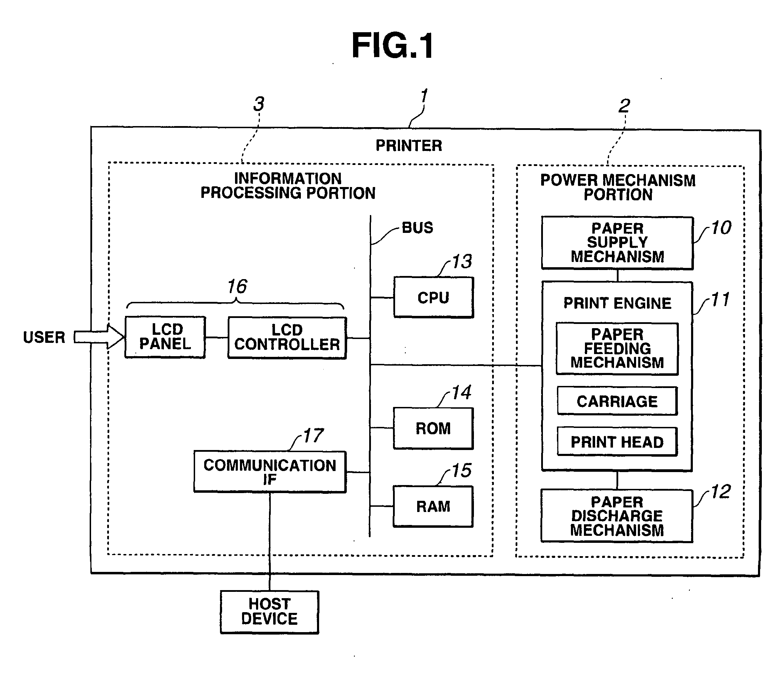

A first embodiment of the present invention will be described with reference to the drawings. Fig. 1 is a block diagram showing the hardware constitution of a printer 1 of this embodiment.

The printer 1 comprises a power mechanism portion 2 constituted by a paper supply mechanism 10 for supplying paper to the interior of the printer, a print engine 11 for performing printing, a paper discharge mechanism 12 for discharging paper outside of the printer device, and so on. The print engine 11 is constituted by a paper feeding mechanism, a carriage mechanism, a print head, and so on.

The constitution and operations of the power mechanism portion 2 are basically the same as the constitution and operations of a conventional printer device. As the print engine 11, for example, various types of print engine may be used, including those that are compatible with a serial printer which performs printing in character units such as an inkjet printer or thermal transfer printer, a line printer which performs printing in line units, and so on.

An information processing portion 3 constituted by a CPU (processor) 13, ROM 14, RAM 15, an LCD panel and LCD controller 16, a communication interface 17, and so on is provided to control the power mechanism portion 2 to perform a printing operation. The CPU 13 is constituted to be accessible to the various means 14 through 18 via an bus, and controls the power mechanism portion 2 to perform an actual printing operation corresponding to a print job transmitted through the communication interface 17 from a terminal device such as a digital camera or a host device such as a personal computer.

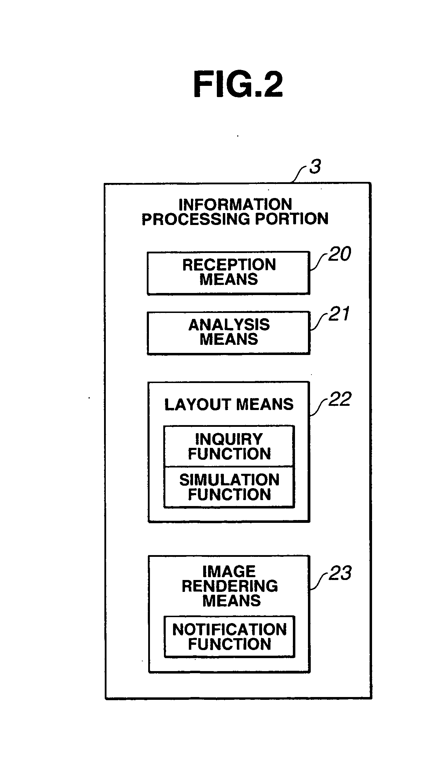

The constitution and operations of the information processing portion 3 are basically the same as the constitution and operations of a conventional printer. Fig. 2 shows the main functional constitution of the information processing portion 3. As shown in the drawing, the information processing portion 3 comprises reception means 20 for receiving as a print job a document (including a CSS file or the like) described in a structured tag language such as HTML or XHTML, analysis means 21 for analyzing the document to extract image objects constituting an image, layout means 22 for determining the coordinate position of each of the image objects within the image and outputting layout information including image rendering commands for rendering the objects in their positions, image rendering means 23 for forming an image on the basis of the layout information and executing print control processing, and so on.

Note that the layout means 22 of this printer 1 differ from a conventional constitution in comprising a function for inquiring of the image rendering means 23 whether or not a predetermined image rendering command is usable, and a simulation function which, if the predetermined image rendering command cannot be used, simulates image rendering corresponding to the predetermined image rendering command using an image rendering command that can be used by the image rendering means 23 and outputs layout information including the simulation result.

In addition to the various means described above, the information processing portion 3 may also comprise image processing means (image decompression means, size conversion means, noise removing means, and so on) such as those provided in a typical printer.

The various means provided in the information processing portion 3 are functionally realized by having the CPU 13 execute application programs stored in the ROM 14 or RAM 15. These application programs are preferably constituted such that they can be installed or loaded in the information processing portion 3 through various types of recording medium such as CD-ROM, magnetic disc, or semiconductor memory, for example, or via a communication network. Further, the CPU 13 preferably executes the programs for realizing the various means on a real time multitask OS.

The functional means that are realized by executing application programs in the manner described above may be understood as tasks (or processes). In other words, the reception means, analysis means, layout means, and image rendering means may be understood respectively as a reception task, an analysis task, a layout task, and an image rendering task that are executed in the information processing portion 3. Hereinafter, "means" and "task" will be described consistently as "task" as long as there is no need to differentiate therebetween.

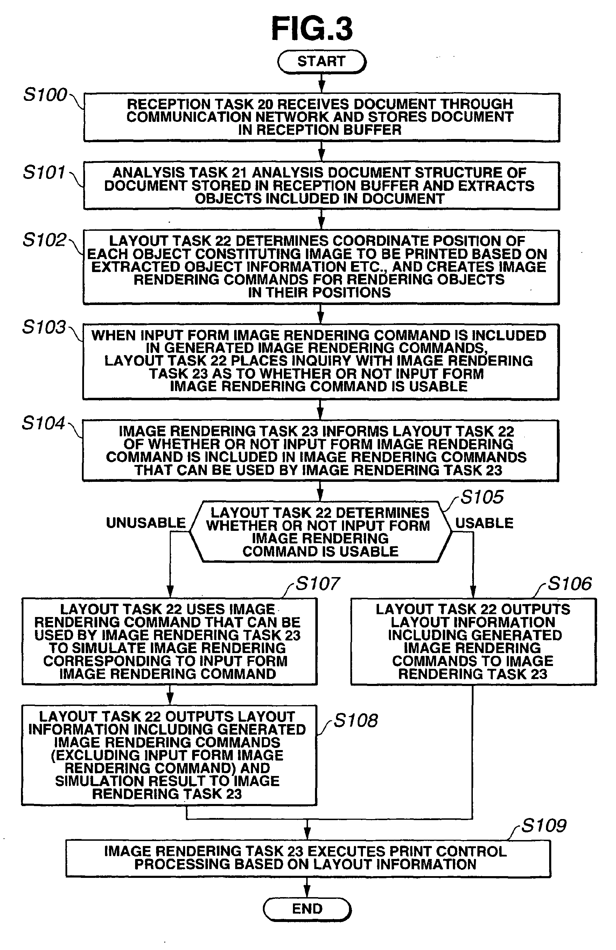

The operations of each task will now be described with reference to the flowchart shown in Fig. 3. Note that each step (including partial steps that have not been allocated reference numerals) may be executed in any order or in parallel with another step provided that no discrepancies arise in the processing content. Further, an image rendering command relating to interactive input/output, an image rendering command used to render an input form, and so on may be considered as examples of the aforementioned predetermined image rendering command about which a usability inquiry is made. In the following description, however, an example in which the latter is used will be provided.

The reception task 20 receives a document described in HTML or the like, for example, from a host device or the like through a communication network, and stores the document in a reception buffer (S100).

The analysis task 21 reads the document from the reception buffer, analyzes the document structure, and extracts the objects (image rendering components such as text, images, borders, buttons, and so on) included in the document (S101). The analysis task 21 may be constituted similarly to a conventional analysis task provided in a printer that is compatible with HTML and the like.

The layout task 22 determines the coordinate position of each object constituting the image to be printed on the basis of information relating to the extracted objects, the results of the analysis of the document, and so on, and generates image rendering commands for rendering the objects in their positions (S102).

Next, if an image rendering command relating to the rendering of an input form (for example, an image rendering command relating to an image rendering component such as a text box, a password box, a check box, a select box, a check box, an exclusion box, a radio button, a submit button, a reset button, or a multipurpose button; to be referred to as an "input form image rendering command" hereinafter) is included in the generated image rendering commands, the layout task 22 inquires of the image rendering task 23 as to whether or not the input form image rendering command can be used (S103). Here, a constitution in which individual inquiries are made for each input form image rendering command may be provided.

Having received the inquiry from the layout task 22, the image rendering task 23 informs the layout task 22 of whether or not the input form image rendering command is included in the image rendering commands that the image rendering task 23 is able to use (for example, image rendering commands provided by a platform), or in other words whether the image rendering task 23 is able to render an image using the input form image rendering command (S104).

Having received notification thereof from the image rendering task 23, the layout task 22 determines whether or not the input form image rendering command can be used (S105).

If the input form image rendering command is usable, the layout task 22 outputs layout information including the generated image rendering commands to the image rendering task 23 (S106).

In the case of a text object, for example, the layout information may be constituted so as to include information such as the image rendering command, font information (font type, size, color, and so on), character code, and the coordinate position of the object. In the case of an image object, the layout information may be constituted so as to include information such as the image rendering command, the storage location for the image, the output size of the image, and the coordinate position of the object. In the case of a border object, the layout information may be constituted so as to include information such as the image rendering command, the line type (solid line, broken line, etc.), color, thickness, and the coordinate position of the object.

If, on the other hand, the input form image rendering command is not usable, the layout task 22 uses an image rendering command that can be used by the image rendering task 23 to simulate image rendering corresponding to the input form image rendering command (S107).

Basic image rendering commands which normally can be used by a typical image rendering task, for example text objects, image objects, border objects, background objects, and so on may be considered as the image rendering commands that can be used by the image rendering task 23.

As for the simulation method, an image rendering command for a text box, for example, may be simulated using an image rendering command for a border object to render the four sides of a box corresponding to the size of the text box, and using an image rendering command for a text object to render the initial display characters inside the box.

Further, in the case of an image rendering command for a submit button or reset button, for example, simulation may be performed by combining a border object and a text object similarly to the text box simulation, or an image rendering command for an image object may be used to render images generated in advance which correspond to each of the buttons.

Note that by combining image rendering commands for border objects, text objects, and image objects appropriately, other input form image rendering commands can also be simulated.

Next, the layout task 22 outputs layout information including the generated image rendering commands (excluding the input form image rendering command) and the results of the simulation (in the case of a text box image rendering command, for example, the border object image rendering command for rendering the four sides of the box corresponding to the size of the text box, the text object image rendering command for rendering the initial display characters inside the box, and so on) to the image rendering task 23 (S108).

The image rendering task 23 receives the layout information from the layout task 22 and executes print control processing on the basis of this layout information (S109). For example, bit map data for the image to be printed are generated on the basis of the image rendering commands and so on in the layout information. Then, a predetermined instruction (a printing request, a paper feed request, a paper supply/paper discharge request, etc.) is outputted to the print engine 11 and the like, for example, whereupon a part of the generated bit map data are transferred to the print engine 11 and printing is executed onto a recording medium such as paper while controlling the print engine 11.

Hence in this embodiment, the layout task 22 places an inquiry with the image rendering task 23 as to whether an input form image rendering command is usable, and if the input form image rendering command is unusable, an alternative usable image rendering command is used to simulate image rendering corresponding to the input form image rendering command, whereupon layout information including the simulation result is outputted. Thus when the image rendering task 23 is capable of responding to an input form image rendering command, an optimized input form image rendering command provided by a platform or the like can be used to render an image of the input form efficiently, flexibly, and speedily, and even if the image rendering task 23 cannot respond to the input form image rendering command, image rendering corresponding to the input form can be executed appropriately on the basis of the simulation result.

Further, when simulating the input form image rendering command, the simulation is performed using basic image rendering commands that can normally be used by a typical image rendering task, for example text objects, image objects, border objects, background objects, and so on, and hence the present invention can be applied easily to various image rendering tasks and platforms without the need to add a function enabling responsiveness to special image rendering commands to the image rendering task or platform.

In particular, according to this type of constitution, even when the input form image rendering function differs in each image rendering system depending on the platform, image rendering medium, and so on, for example, or when it is not even clear whether an input form image rendering function is provided, the analysis means and layout means can be used in common regardless of differences in or the presence of the image rendering function, and hence a high degree of flexibility can be ensured.

### (Modified Examples)

The present invention is not limited to the embodiment described above, and may be applied in various modified forms.

For example, instead of inquiring as to the usability of an input form image rendering command, an inquiry may be made as to the possibility of rendering a predetermined object (an image rendering component such as a box or button) relating to the rendering of an input form image. If the predetermined object cannot be rendered, basic objects that can be rendered by the image rendering task 23 may be used to simulate image rendering of the predetermined object (by combining basic objects to emulate the shape, characters, and so on of the image rendering component, for example), whereupon layout information including the simulation result is outputted.

As another example, instead of making usability inquiries for each individual input form image rendering command or object, a single inquiry may be made as to the presence of an input form image rendering function such that if there is no image rendering function, the image rendering commands or objects relating to the input form are all simulated. In this case, a constitution may be considered in which a determination as to whether or not to place an inquiry is made on the basis of the presence of a FORM tag or the like indicating an input form within the document, for example.

As another example, instead of, or in addition to, input form image rendering commands or objects relating to input form rendering, inquiries about and simulations of other image rendering commands or objects (for example, image rendering commands or objects relating to other interactive input/output) may be made.

Further, for example, since the layout task 22 can learn the image rendering positions of the various boxes, buttons, and so on based on the results of simulations of these boxes, buttons, and so on, processing for detecting an event such as a button click can also be favorably executed. By incorporating event detection processing into the layout task 22, an interactive image rendering system comprising a so-called event system (a system for performing a predetermined operation when an event such as a button click occurs) can be constructed.

Further, for example, the analysis task 21, layout task 22, and image rendering task 23 do not necessarily have to be realized in the same information processing device, and instead may be realized in physically separate devices.

Finally, in addition to devices which are generally known as printers, for example inkjet printers, serial printers, and line printers, the present invention may be applied to various information processing devices (copy machines, faxes, handy-terminals, browsers, and so on) comprising a function for rendering an image on the basis of a document described in a structured tag language. Moreover, the image rendering mode may be considered in various forms other than printing onto paper, for example display on a display device, and so on.

The entire disclosure of Japanese Patent Application No. 2003-95378 filed on March 31, 2003, including specification, claims, drawings, and summary, is incorporated herein by reference in its entirety.

## Claims

1. An information processing device for determining the image rendering positions within an image of various objects constituting the image, and outputting to image rendering means layout information including image rendering commands for rendering the objects in their positions, comprising:
a function for placing an inquiry with said image rendering means as to whether a predetermined image rendering command is usable or not; and
a simulation function which, when said predetermined image rendering command is not usable, simulates image rendering corresponding to said predetermined image rendering command using an image rendering command that can be used by said image rendering means, and outputs layout information including the simulation result.

2. The information processing device according to claim 1, wherein said simulation function simulates image rendering corresponding to said predetermined image rendering command using an image rendering command for at least one of a text object, an image object, a border object, and a background object.

3. The information processing device according to claim 1, comprising analysis means for analyzing a document described in a structured tag language, and extracting therefrom objects constituting an image.

4. The information processing device according to claim 1, wherein said predetermined image rendering command or object is an image rendering command or object relating to interactive input/output.

5. The information processing device according to claim 1, wherein said predetermined image rendering command or object is an image rendering command or object used in the image rendering of an input form.

6. An image rendering device comprising the information processing device according to claim 1, and image rendering means for rendering an image on the basis of said layout information, wherein
said image rendering means inform said information processing device of an image rendering command or object that can be used by said image rendering means in response to an inquiry from said information processing device.

7. An information processing device for determining the image rendering positions within an image of various objects constituting the image, and outputting to image rendering means layout information including said image rendering positions, comprising:
a function for placing an inquiry with said image rendenng means as to whether a predetermined object can be rendered or not; and
a simulation function which, when said predetermined object cannot be rendered, simulates image rendering of said predetermined object using an object that can be rendered by said image rendering means, and outputs layout information including the simulation result.

8. The information processing device according to claim 7, wherein said simulation function simulates image rendering of said predetermined object using at least one of a text object, an image object, a border object, and a background object.

9. The information processing device according to claim 7, comprising analysis means for analyzing a document described in a structured tag language, and extracting therefrom objects constituting an image.

10. The information processing device according to claim 7, wherein said predetermined image rendering command or object is an image rendering command or object relating to interactive input/output.

11. The information processing device according to claim 7, wherein said predetermined image rendering command or object is an image rendering command or object used in the image rendering of an input form.

12. An image rendering device comprising the information processing device according to claim 7, and image rendering means for rendering an image on the basis of said layout information, wherein
said image rendering means inform said information processing device of an image rendering command or object that can be used by said image rendering means in response to an inquiry from said information processing device.

13. An information processing method for determining the image rendering positions within an image of various objects constituting the image, and outputting layout information including image rendering commands for rendering the objects in their positions, comprising the steps of:
placing an inquiry with image rendering means, which serve as an output destination for the layout information, as to whether a predetermined image rendering command is usable or not; and
when said predetermined image rendering command is not usable, simulating image rendering corresponding to said predetermined image rendering command using an image rendering command that can be used by said image rendering means, and outputting layout information including the simulation result.

14. An information processing method for determining the image rendering positions within an image of various objects constituting the image, and outputting layout information including said image rendering positions, comprising the steps of:
placing an inquiry with image rendering means, which serve as an output destination for the layout information, as to whether a predetermined object can be rendered or not; and
when said predetermined object cannot be rendered, simulating image rendering of said predetermined object using an object that can be rendered by said image rendering means, and outputting layout information including the simulation result.

15. A program for causing a computer to execute the information processing method according to claim 13 or 14.
